# EUROPEAN PATENT APPLICATION

(11) **EP 2 036 811 A2**
(43) Date of publication of application: **18.03.2009**
(21) Application number: 08252739.1
(22) Date of filing: 19.08.2008
(51) Int. Cl.: B62M 3/00

(54) **Composite crank assembly**

(30) Priority: 04.09.2007 US 849856
(71) Applicant: Cannondale Bicycle Corporation, Bethel CT 06801 (US)
(72) Inventor: Dodman, Christopher, 4057 Basel (CH); Detwiler, Curtis W., Altoona, Pensylvania 16602 (US)
(74) Representative: Chiva, Andrew Peter

(57) **Abstract**

A crank assembly (100) formed as a unitary composite structure, the crank arms (104,106) and crank shaft (103) being hollow to provide maximum weight reduction, the crank arms being over-sized to provide the necessary stiffness and strength. The unitary composite crank assembly may further include a crank claw integrally formed with the crank assembly. Additionally, a spider (130) may be integrally formed with the crank assembly reducing the amount of parts for the assembly, increasing stiffness and reducing overall weight.

## Description

### FIELD OF THE INVENTION

The invention relates to a composite crank assembly and more specifically to a single-piece unitary structure crank assembly formed from a composite material.

### BACKGROUND OF THE INVENTION

Crank arm assemblies have been in use for many years and typically include a crank shaft, bearings for facilitating rotation of the crank shaft in a bottom bracket of a bicycle, and opposing crank arms affixed to ends of the crank shaft. A chain sprocket is typically coupled to one side of the crank shaft to rotate with the crank shaft and thereby drive a chain coupled to a rear wheel of the bicycle.

The crank arm assembly and crank shaft are subject to considerable forces applied by a rider as they pedal the bicycle. As such, most know system have provided crank arms and crank shafts made of metal or a metal composite to afford the necessary strength characteristics. Additionally, systems have provided an integrally formed crank arm and spider that couples to the chain sprocket. However, many of these designs resulted in a rather large, heavy crank assembly.

To combat these problems, crank arms have been provided with hollow interiors such as, for example, U.S. Patent Nos. 5,493,937; 5,988,016; 6,314,834 and U.S. Patent Application Publication No. 2004/0149076. While providing hollow crank arms does reduce the weight of the assembly to an extent, the crank assembly is still quite heavy, which during competitive racing is a severe disadvantage to the rider. Other systems have provided crank arms with integrally formed spiders to couple to the chain ring, including U.S. Patent No. 5,893,299 and U.S. Patent Application Publication Nos. 2004/0162172 and 2004/0177717. However, these systems, while attempting to reduce the overall weight of the crank assembly are quite heavy due to the metal fabrication material.

Still other systems have attempted to provide portions of the crank assembly as a composite material, such as a carbon fiber or pre-impregnated resin fiber. While composite materials do reduce the overall weight of the system, composite materials typically do not have the same strength characteristics of metal. For example, U.S. Patent No. 4,811,626 discloses use of a multi-sectional crank arm assembly that uses a metal hub for the crank. This system is complicated to fabricate being formed from so many pieces, which weaken the overall design and is a combination of composite material and metal disadvantageously increasing the overall weight of the device.

U.S. Patent No. 5,632,940 is directed toward a crank arm constructed from a composite material. However, this system comprises a plurality of composite material structures encased in a polymer composite material. Again, while this system does reduce the overall weight of the system to an extent, due to the solid construction technique, it is still too heavy and has strength issues where the crank arms couple to the crank shaft.

European Patent No. 1,378,433 provides still another crank arm configuration utilizing a composite material. This system provides a hollow interior that reduces overall weight, however, the patent still teaches use of a metal bottom bracket axle fitting that couples to the composite crank arm. (See, Col. 5, Ins. 24-31.) Due to the tremendous stresses applied to the crank arm assembly, especially in competition, this configuration will no provide the necessary strength characteristics required and is still unnecessarily heavy.

Still further, U.S. Patent Application Publication No. 2004/0182197 discloses a crank arm formed of a composite material and having an integrally formed spider to couple to the chain ring. While this system does provide for reduced weight and increased coupling strength, the system is still unnecessarily heavy and due to the coupling arrangement with the crank shaft, has strength issues.

Additionally, U.S. Patent Application Publication No. 2006/0103106 discloses a system where both the right crank arm and the left crank arm are each integrally connected to the crank axle. However, this system fails to provide for a system that includes an integral feature for coupling to the spider. In addition, this system further teaches that a continuous septum that extends through crank axle and bent regions and through at least a portion of right crank arm and left crank arm.

### SUMMARY OF THE INVENTION

What is desired is a system and method that reduces to an absolute minimum, the overall weight of the crank assembly (e.g. the crank arms and the crank shaft) without having any supporting members running therethrough.

It is further desired to provide a system and method that increases the overall strength of the crank assembly while at the same time, keeps the weight of the crank assembly to a minimum.

It is still further desired to provide a system and method that is quick and easy to install reducing the overall number of pieces and parts that require assembly.

It is yet further desired to provide a system and method that increases the overall strength of the crank arm assembly coupling to the chain ring.

These and other objects are achieved, in one advantageous embodiment, by the provision of a single unitary crank arm assembly formed of a composite material. For example, the crank arms are provided as a single unitary structure with the crank shaft to form a single composite structure. Advantageously, the crank arms are provided as hollow tubes to still further reduce the overall weight of the apparatus. The crank shaft is provided with bearings positioned thereon to allow the crank shaft to rotate within the bottom bracket assembly. The single unitary structure provides superior strength characteristics as there are not couplings between the crank arms and the crank shaft. To further increase the strength of the assembly, the crank arms may be fabricated over-sized.

In alternative embodiments, the single unitary crank assembly may further include an integrally formed spider to couple to the chain ring(s). The spider may be formed from the composite material such that the entire assembly is preformed reducing the weight of the structure and increasing the overall strength.

Still further, it is contemplated that the crank assembly may be formed integral with a spider providing superior strength and reduction in weight of the assembly. The spider may be provided with a chain ring provided on a circumference thereof. The chain ring may be provided as a metal cap or attachment that extends beyond the diameter of the spider to engage with the chain. The spider may further be provided having multiple chain rings attachable thereto having differing circumferences to accommodate different riding conditions.

In one advantageous embodiment, a crank assembly for attaching to a bottom bracket of a bicycle is provided comprising a substantially cylindrical crank shaft portion extending longitudinally through the bottom bracket, the crank shaft portion being formed of a composite material. The assembly further comprises a first crank arm portion having a proximal end extending from a first end of the crank shaft portion, the first crank arm portion integrally form of a composite material with the crank shaft portion. The assembly still further comprises a second crank arm portion having a proximal end extending from a second end of the crank shaft portion opposite the first end, the second crank arm portion integrally form of a composite material with the crank shaft portion. The assembly is provided such that the crank shaft, the first crank arm and the second crank arm are all integrally formed of a composite material to form a single unitary crank assembly. The assembly is further provided such that the substantially cylindrical crank shaft portion has an integrally formed splined surface provided at the first end for engaging with a spider.

In another advantageous embodiment, a crank assembly for attaching to a bottom bracket of a bicycle is provided comprising a substantially cylindrical crank shaft portion extending longitudinally through the bottom bracket, the crank shaft portion being formed of a composite material. The assembly further comprises a first crank arm portion having a proximal end extending from a first end of the crank shaft portion, the first crank arm portion integrally form of a composite material with the crank shaft portion. The assembly still further comprises a second crank arm portion having a proximal end extending from a second end of the crank shaft portion opposite the first end, the second crank arm portion integrally form of a composite material with the crank shaft portion. The assembly is provided such that the crank shaft, the first crank arm and the second crank arm are all integrally formed of a composite material to form a single unitary crank assembly. The assembly also comprises a spider, comprising a composite material, the spider integrally formed with the crank shaft and crank arms.

In another advantageous embodiment, a method for making a single unitary crank assembly from a composite material to be positioned in a bottom bracket assembly of a bicycle is provided comprising the steps of defining a substantially cylindrical crank shaft portion of a composite material, the crank shaft having first and second ends, defining a hollow elongated first crank arm portion of a composite material having a proximal end and defining a hollow elongated second crank arm portion of a composite material having a proximal end. The method further comprises the steps of forming a composite unitary crank assembly by affixing the first crank arm to a first end of the crank shaft and affixing the second crank arm to the second end of the crank shaft. The method still further comprises the step of integrally forming a splined surface on the substantially cylindrical crank shaft portion for engaging with a spider. The method also comprises the steps of positioning a first bearing around the first end of the crank shaft portion, positioning a second bearing around the second end of the crank shaft portion and positioning the crank assembly into the bottom bracket of a bicycle.

In another advantageous embodiment, a method for making a single unitary crank assembly from a composite material to be positioned in a bottom bracket assembly of a bicycle is provided comprising the steps of defining a substantially cylindrical crank shaft portion of a composite material, the crank shaft having first and second ends, defining a hollow elongated first crank arm portion of a composite material having a proximal end and defining a hollow elongated second crank arm portion of a composite material having a proximal end. The method further comprises the steps of forming a composite unitary crank assembly by affixing the first crank arm to a first end of the crank shaft and affixing the second crank arm to the second end of the crank shaft. The method still further comprises the step of integrally forming a spider of a composite material with the crank shaft and crank arms. The method also comprises the steps of positioning a first bearing around the first end of the crank shaft portion, positioning a second bearing around the second end of the crank shaft portion and positioning the crank assembly into the bottom bracket of a bicycle.

Other objects of the invention and its particular features and advantages will become more apparent from consideration of the following drawings and accompanying detailed description.

### BRIEF DESCRIPTION OF THE DRAWINGS

FIG. 1 is an illustration of a single-piece composite crank assembly.

FIG. 2 is an illustration of drive side the single-piece composite crank assembly according to FIG. 1 installed in the bottom bracket of a bicycle with an attached chain ring.

FIG. 3 is an illustration of an opposite side of the single-piece composite crank assembly according to FIG. 2 installed in the bottom bracket of a bicycle with an attached chain ring.

FIG. 4 is front view of the single-piece composite crank assembly according to FIG. 1 with an integrally formed spider coupled to a chain ring(s).

FIG. 5 is side view of the single-piece composite crank assembly according to FIG. 4.

FIGS. 6-9 are cut-away drawings that illustrate a series of steps for forming the single-piece composite crank assembly according to FIG. 1 integrally with a spider to for a unitary structure.

FIG. 10 is an exterior view of the integrally formed single-piece composite crank assembly according to FIG. 1 with the spider.

FIG. 11 is a partial view of the exterior of the spider according to FIG. 10.

FIG. 12 is a view of a first side of the spider according to FIG. 11 with a chain ring affixed to the spider.

FIG. 13 is a view of a second side of the spider according to FIG. 12 with multiple chain rings affixed to the spider.

### DETAILED DESCRIPTION OF THE INVENTION

Referring now to the drawings, wherein like reference numerals designate corresponding structure throughout the views.

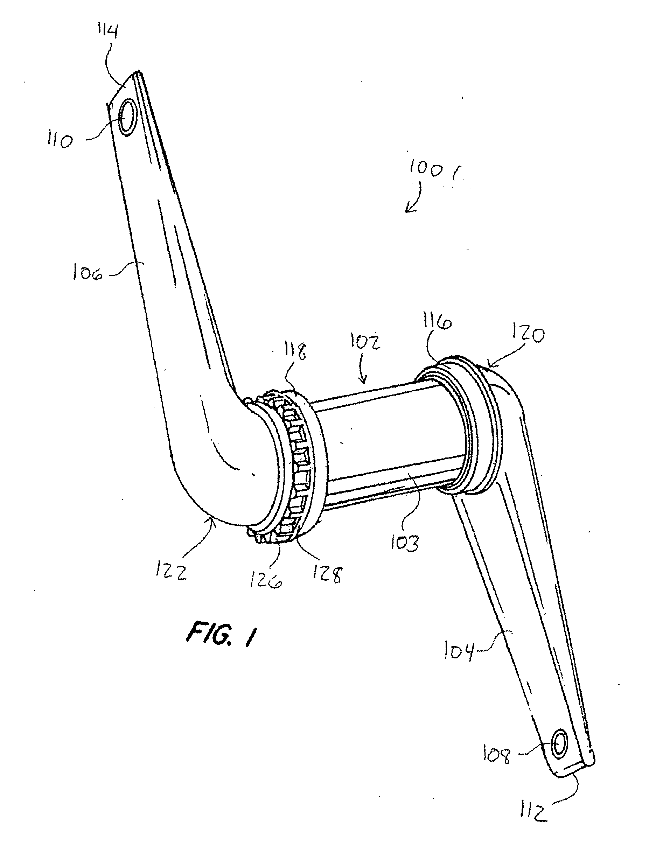

FIG. 1 is a perspective view of the composite crank assembly 100. The composite crank assembly 100 generally includes a crank shaft 102, a first crank arm 104 and a second crank arm 106. The crank assembly 100 is formed as a single, unitary composite structure such that no couplings or joints are provided between the crank arms 104, 106 and the crank shaft 102. The unitary structure increases stiffness and strength in part, by eliminating stress concentrations, and slight movement, loosening and wear in joints. In addition, the fabrication as a composite structure reduces the overall weight of the device and eliminates creaking by reducing the number of overall parts.

The crank arms 104, 106 are provided with pedal bores 108, 110 provided in distal ends 112, 114 respectively. The pedal bores 108, 110 are provided for coupling pedals (not shown) to the crank assembly 100.

The crank arms 104, 106 are provided in this embodiment, as over-sized elongated arms. While conventional crank arms are provided having a relatively small diameter (e.g. typically 24 mm), crank arms 104, 106 are provided having a width of approximately 35-40 mm. The crank arms 104, 106 are provided as hollow structures to further lighten the crank assembly 100. However, the crank arms 104, 106 are provided as over-sized arms ensuring strength and stiffness.

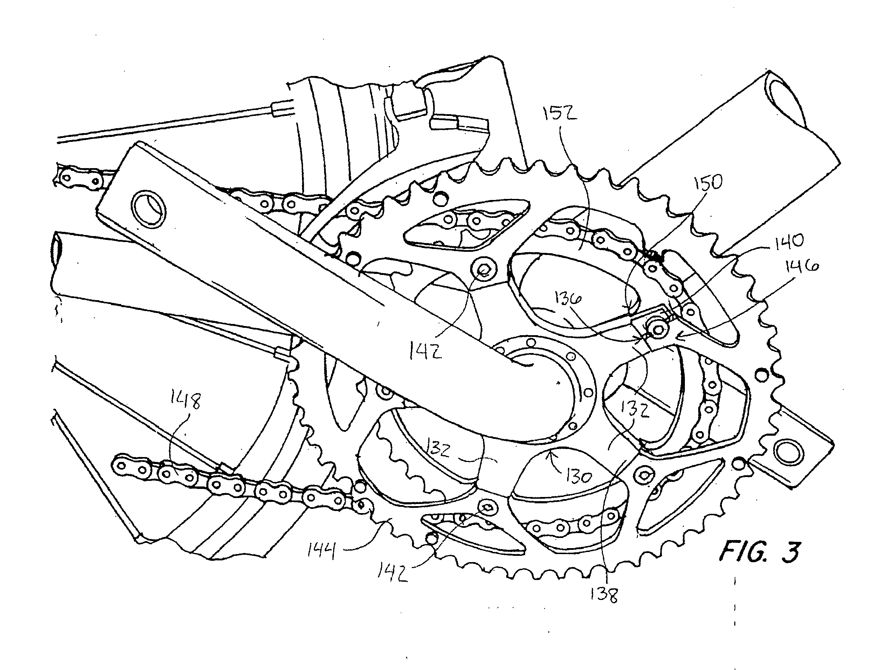

Also shown in FIG. 1 are bearings 116, 118 positioned at first end 120 and second end 122 of crank shaft 102. The bearings 116, 118 are provided surrounding crank shaft 102 and engage with an inner surface (not shown) of a bottom bracket 124 (FIG. 3) allowing the crank assembly 100 to rotate relative to the bottom bracket 124. Bearings 116, 118 are fitted over the end 112 of crank arm 104 and slid into position on crank shaft 102. It is further contemplated that a sleeve 103, such as for example, comprising an alloy such as aluminum, may be fitted over crank shaft 102. In this embodiment, bearings 116, 118 are positioned on the outside of the aluminum sleeve 103, which may be used to reduce wear of the crank shaft 102. The bearings 116, 118 may further be held in place by protrusions or rings (not shown), for example, positioned in bottom bracket 124. One example of a bottom bracket assembly that may effectively be used with the crank assembly 100 is disclosed in U.S. Patent Application Serial No. 11/735,212 filed on April 13, 2007 entitled "Split Bottom Bracket" and is incorporated herein by reference.

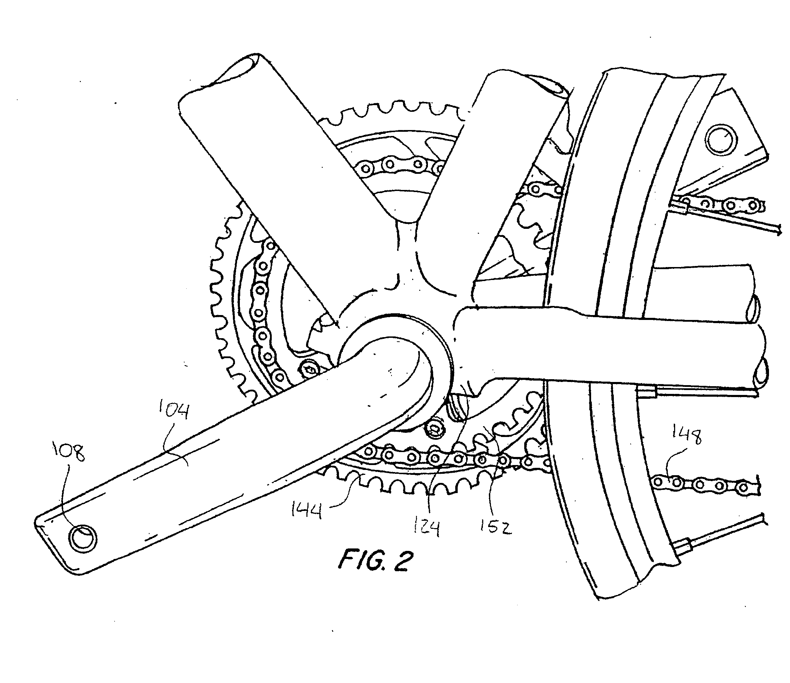

Splined surface 126 and collar 128 are provided at one end of crank shaft 102 for engaging with a spider 130 (FIGS. 2 & 3). It is contemplated that splined surface 126 and collar 128, in one embodiment, are integrally formed with crank shaft 102 reducing the number of parts and increasing stiffness of the structure.

Referring now to FIGS. 2 and 3, the crank assembly 100 is illustrated mounted in the bottom bracket 124 with the spider 130 attached to crank shaft 102. In this embodiment, the spider 130 is detachably connectable to crank shaft 102 and may comprise a light weight metal or alloy. The spider 130 is provided, in this embodiment, with five spokes 132 that extend radially outward relative to crank shaft 102. While five spokes 132 are provided, it is contemplated that a greater or fewer number of spokes may be provided, the number typically ranging from three to six, but more may be used if desired.

The spokes 132 are provided with a first mounting surface 136 at the end 138 of each spoke 132. The first mounting surface 136 is provided as a stepped portion 140 having an opening provided therein for receiving a mounting element 142, such as, a bolt. A chain ring 144 is coupled to the spoke 132 by means of the mounting element 142. The chain ring 144 is provided with a mounting portion 146 complementary to mounting surface 136 of spoke 132. Chain ring 144 is provided having a splined circumference for engaging with a chain 148 to drive the bicycle as is well known in the art.

Also provided on spoke 132 is a second mounting surface 150 provided at the end 138 of each spoke 132 and substantially opposite to first mounting surface 136. It is contemplated that mounting element 142 may effectively be used to secure a second chain ring 152 to the second mounting surface 150, the second chain ring having an outer circumference smaller than and offset from the outer circumference of chain ring 144. In this particular embodiment, both chain ring 144 and second chain ring 152 may advantageously comprise a light-weight metal or alloy.

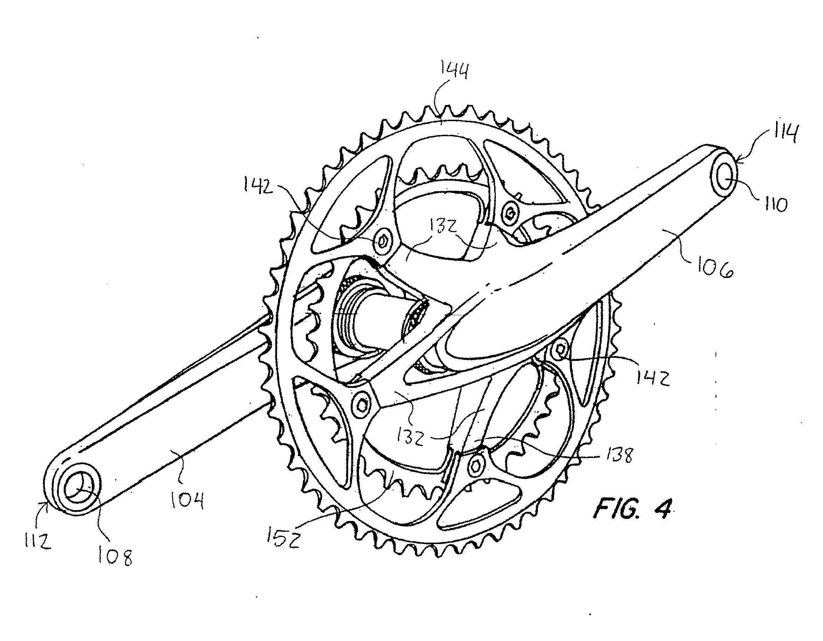

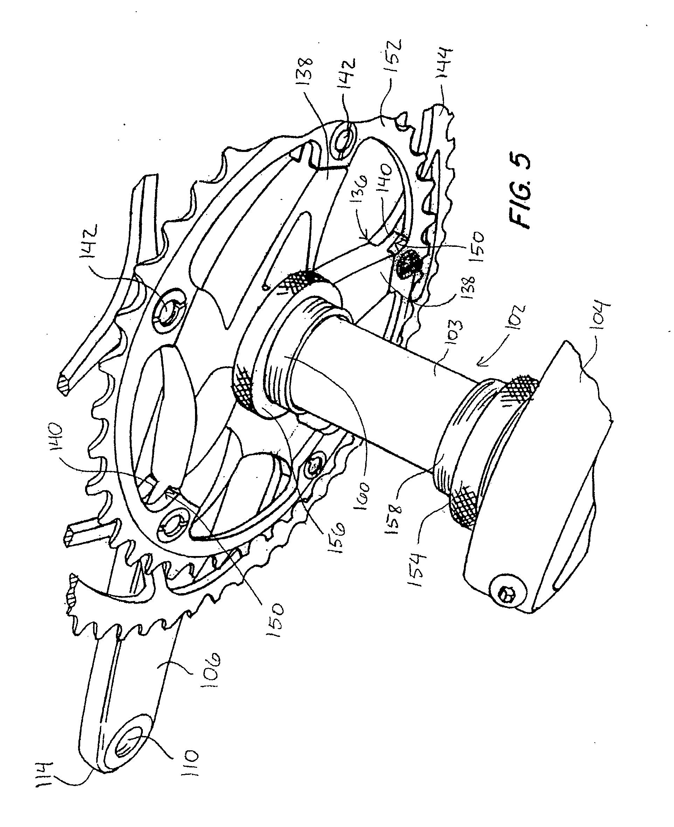

Turning now to FIGS. 4 and 5, the crank assembly is similar to that illustrated and described in connection with FIGS. 2 and 3, however, in this embodiment; the spider 130 is integrally formed with crank assembly 100. This again provides for fewer parts, which increases stiffness and strength in part, by eliminating stress concentrations, and slight movement, loosening and wear in joints. Integrating the spider 130 with the crank assembly 100 also reduces the overall weight of the device as the spider is fabricated from a composite material, and eliminates creaking by reducing the number of overall parts.

Also illustrated in FIGS. 4 and 5 are end caps 154, 156, which include threaded portions 158, 160 that may in one advantageous embodiment, engage with threads on an interior surface of bottom bracket 124.

Again, crank assembly 100 is provided as a single, unitary composite structure including spider 130, where crank arms 102, 104 are provided having a hollow core to further reduce overall weight. It is further contemplated that in one advantageous embodiment, crank shaft 102 is also provided having a hollow core to still further lighten the overall weight of the device. Alternatively, the core may be filled with a foam substance to provide further support for the device. While certain configuration of crank assembly 100 are described in connection with the embodiment of FIGS. 4 and 5, it is contemplated that they may equally apply to the embodiments described in connection with FIGS. 1-3 and FIGS. 6-13.

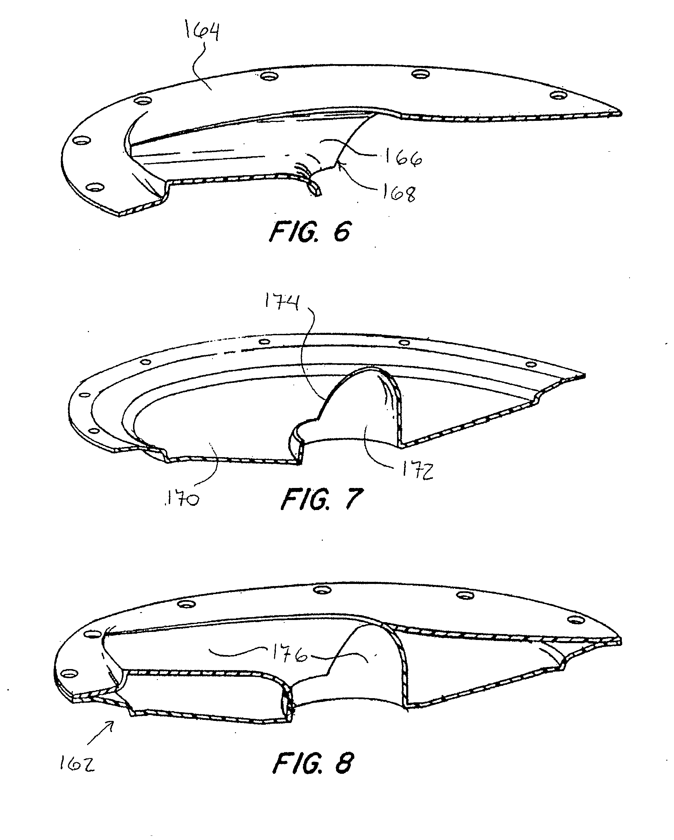

Referring now to FIGS. 6-9, a method of integrally manufacturing a composite spider 162 (FIGS. 8-10) with the crank assembly 100 is illustrated in the cut-away drawings as a series of steps. For example, FIG. 6 illustrated a first spider portion 164 including an opening 166 extending therethrough for receiving crank assembly 100. The opening 166 further includes a coupling portion 168. FIG. 7 illustrates a second spider portion 170 having an opening 172 extending therethrough. The opening 172 further includes a coupling portion 174 that is complementary to coupling portion 168 of first spider portion 164.

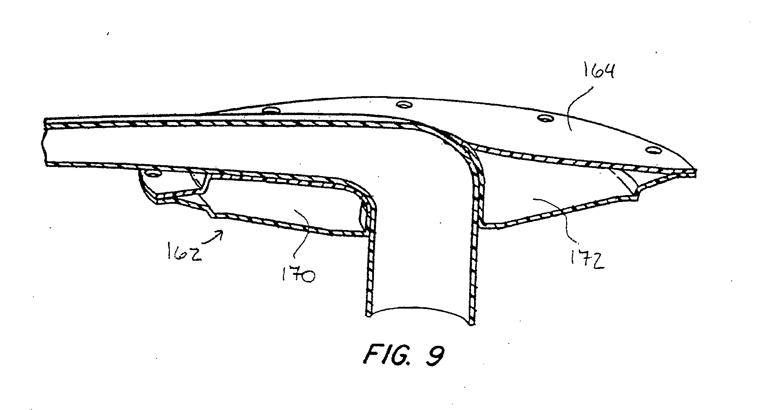

As illustrated in FIG. 8, when first and second spider portions 164, 170 are positioned together, the openings 166, 172 form a channel 176 for receiving crank assembly 100. In one advantageous embodiment, the premolded first and second spider portions 164, 170 are put in a final mold and the crank arm 106 is then bladder molded into the spider 162. It should be noted that the spider 162 constrains the crank arm 106 where it passes through the channel 176 for form the molded unitary structure as illustrated in FIG. 9.

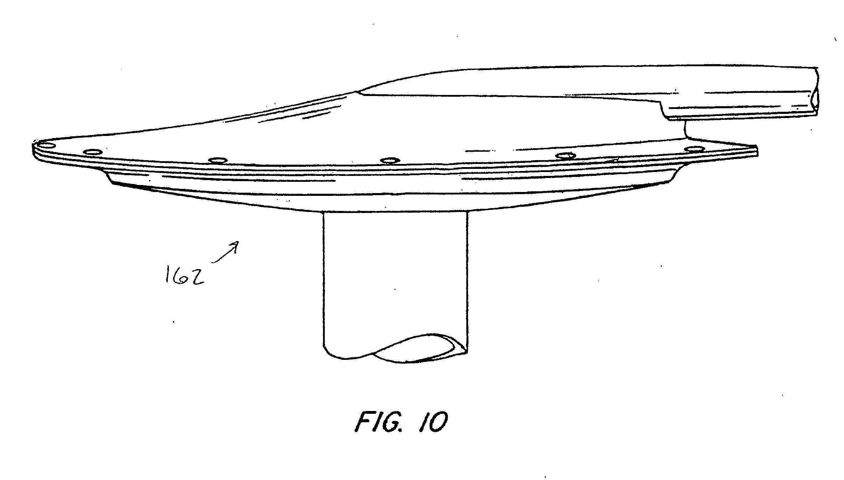

FIG. 10 illustrates the molded unitary structure including the crank assembly 100 integrally molded with the spider 162. As seen in FIG. 9, the molded spider 162 is provided with a hollow interior space 172 still further reducing the overall weight of the structure.

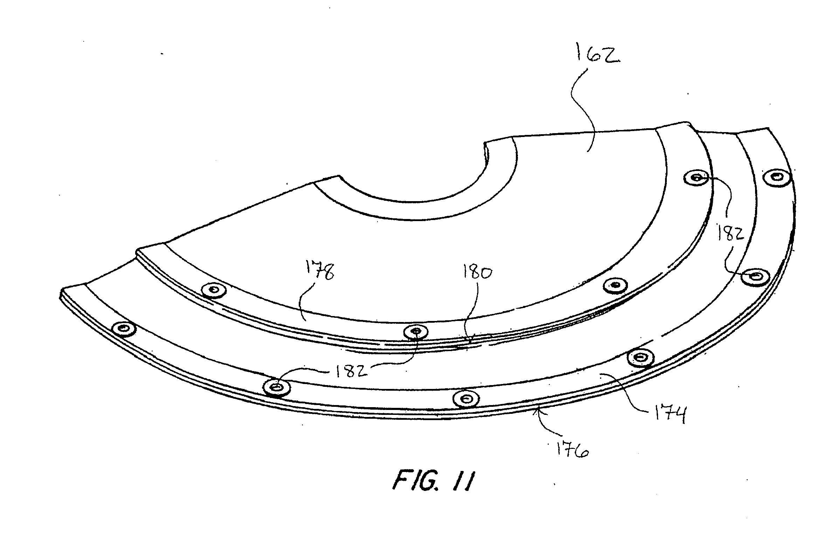

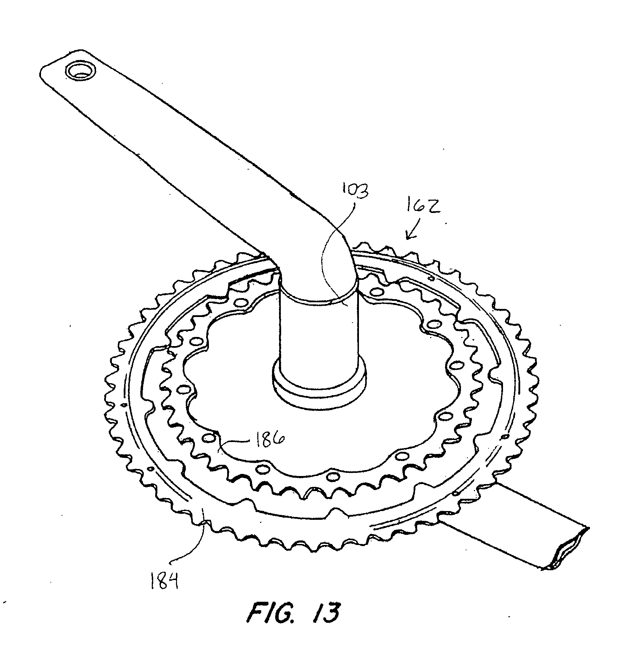

Referring now to FIG. 11, a partial view of the spider 162 is illustrated including an outer surface 174 having an outer circumference 176 and a raised portion 178 having an inner circumference 180 that is smaller than outer circumference 176. Pads 182 are variously positioned on raised portion 178 and may, in one embodiment, comprise aluminum pads. The aluminum pads 182 may be faced, drilled and tapped so that the attached chain rings 184, 186 (FIG. 13) may run true without depending on perfect spider flatness out of the mold.

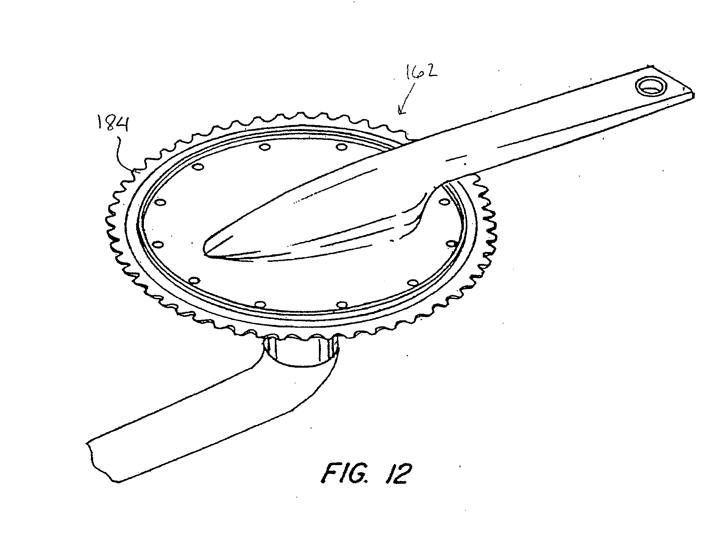

FIGS. 12 and 13 show chain rings 184, 186 affixed to outer circumference 176 and inner circumference 180 respectively. In this embodiment it can be seen that the chain rings 184, 186 have been reduced to a minimum, which greatly reduces the over all weight of the device. In one embodiment, chain rings 184, 186 are affixed to spider 162 by bolts, such as for example, M3 Torx bolts to take advantage of the lateral stiffness of the spider 162.

Although the invention has been described with reference to a particular arrangement of parts, features and the like, these are not intended to exhaust all possible arrangements or features, and indeed many other modifications and variations will be ascertainable to those of skill in the art.

## Claims

1. A crank assembly for attaching to a bottom bracket of a bicycle comprising:
a substantially cylindrical crank shaft portion extending longitudinally through the bottom bracket, said crank shaft portion formed of a composite material;
a first crank arm portion having a proximal end extending from a first end of said crank shaft portion, said first crank arm portion integrally form of a composite material with said crank shaft portion; and
a second crank arm portion having a proximal end extending from a second end of said crank shaft portion opposite the first end, said second crank arm portion integrally form of a composite material with said crank shaft portion;
said crank shaft, said first crank arm and said second crank arm all integrally formed of a composite material to form a single unitary crank assembly;
a spider, comprising a composite material, said spider integrally formed with the crank shaft and crank arms.

2. The crank assembly according to claim 1 wherein said spider is hollow.

3. The crank assembly according to claim 1 or 2 wherein said spider comprises an outer edge having a first circumference and a first chain ring is affixed along the outer edge.

4. The crank assembly according to claim 3 wherein said spider comprises a raised portion having a second circumference smaller than and laterally offset from the first circumference and a second chain ring is affixed along the raised portion.

5. A method for making a single unitary crank assembly from a composite material to be positioned in a bottom bracket assembly of a bicycle comprising the steps of:
defining a substantially cylindrical crank shaft portion of a composite material, the crank shaft having first and second ends;
defining a hollow elongated first crank arm portion of a composite material having a proximal end;
defining a hollow elongated second crank arm portion of a composite material having a proximal end;
forming a composite unitary crank assembly by affixing the first crank arm to a first end of the crank shaft and affixing the second crank arm to the second end of the crank shaft;
integrally forming a spider of a composite material with the crank shaft and crank arms;
positioning a first bearing around the first end of the crank shaft portion; positioning a second bearing around the second end of the crank shaft portion; and
positioning the crank assembly into the bottom bracket of a bicycle.

6. The method according to claim 5 further comprising the steps of forming a first spider portion having a first cavity positioned therein for the first crank arm to extend through;
forming a second spider portion complementary to the first spider portion, the second spider portion having a second cavity positioned therein for the first crank arm to extend through;
coupling the first and second spider portions to each other; inserting the first crank arm of the composite unitary crank assembly through the first and second cavities such that at least a portion of the first crank arm extends through the first and second cavities; and
forming the composite unitary crank assembly and spider portions as a single unitary composite structure.

7. The method according to claim 5 or 6 wherein the spider comprises an outer edge having a first circumference, the method further comprising the step of affixing a first chain ring along the outer edge.

8. The method according to claim 7 further comprising the steps of:
forming a raised portion on the spider, the raised portion having a second circumference smaller than and laterally offset from the first circumference; and
affixing a second chain ring along the raised portion.

9. The method according to any one of claims 5-8 further comprising the step of positioning an alloy sleeve around the crank shaft and at least one of the first bearing or the second bearing are positioned around the alloy sleeve.

10. A crank assembly for attaching to a bottom bracket of a bicycle comprising:
a substantially cylindrical crank shaft portion extending longitudinally through the bottom bracket, said crank shaft portion formed of a composite material;
a first crank arm portion having a proximal end extending from a first end of said crank shaft portion, said first crank arm portion integrally form of a composite material with said crank shaft portion; and
a second crank arm portion having a proximal end extending from a second end of said crank shaft portion opposite the first end, said second crank arm portion integrally form of a composite material with said crank shaft portion;
said crank shaft, said first crank arm and said second crank arm all integrally formed of a composite material to form a single unitary crank assembly;
said substantially cylindrical crank shaft portion having an integrally formed splined surface provided at the first end for engaging with a spider.

11. The crank assembly according to claim 10 wherein said first and second crank arms are hollow.

12. The crank assembly according to claim 10 or 11 wherein said first and second crank arms further comprise a pedal bore extending therethrough at a distal end of said first and second crank arms respectively.

13. The crank assembly according to claim 10, 11 or 12 wherein said composite material comprises a non-ferrous material.

14. The crank assembly according to any one of claims 10-13 wherein said composite material comprises a carbon fiber material.

15. The crank assembly according to any one of claims 10-14 wherein said composite material comprises a pre-impregnated fibrous material.

16. The crank assembly according to any one of claims 10-15 further comprising an alloy sleeve positioned around said crank shaft, at least one of said first and second bearings positioned around the alloy sleeve.

17. The crank assembly according to any one of claims 10-16 wherein said first and second crank arms have a width of at least 35 mm.

18. The crank assembly according to any one of claims 10-17 further comprising a spider coupled to the splined surface of said crank assembly, said spider having a first mounting position and a first chain ring coupled to the first mounting position of said spider.

19. The crank assembly according to claim 18 wherein said spider comprises a second mounting position and a second chain ring affixed to the second mounting position, the second chain ring laterally offset from the first chain ring and having a smaller circumference than the first chain ring.

20. The crank assembly according to claim 18 or 19 wherein said spider comprises at least four arms coupled to the first chain ring.

21. A method for making a single unitary crank assembly from a composite material to be positioned in a bottom bracket assembly of a bicycle comprising the steps of:
defining a substantially cylindrical crank shaft portion of a composite material, the crank shaft having first and second ends;
defining a hollow elongated first crank arm portion of a composite material having a proximal end;
defining a hollow elongated second crank arm portion of a composite material having a proximal end;
forming a composite unitary crank assembly by affixing the first crank arm to a first end of the crank shaft and affixing the second crank arm to the second end of the crank shaft;
integrally forming a splined surface on the substantially cylindrical crank shaft portion for engaging with a spider;
positioning a first bearing around the first end of the crank shaft portion; positioning a second bearing around the second end of the crank shaft portion; and
positioning the crank assembly into the bottom bracket of a bicycle.

22. The method according to claim 21 further comprising the steps of forming first and second pedal bores in distal ends of the first and second crank arms respectively.

23. The method according to claim 21 or 22 wherein the composite material comprises a carbon fiber material.

24. The method according to claim 21, 22 or 23 wherein the first and second crank arms are formed having a width of at least 35 mm.

25. The method according to any one of claims 21-24 further comprising the steps of:
coupling a spider to the crank assembly, the spider having a first mounting position; and
coupling a first chain ring to the first mounting position of the spider.

26. The method according to claim 25 further comprising the steps of:
providing a second mounting position on the spider; and
coupling a second chain ring to the second mounting position, the second chain ring laterally offset from the first chain ring and having a smaller circumference than the first chain ring.

27. The method according to any one of claims 21-26 further comprising the step of positioning an alloy sleeve around the crank shaft and at least one of the first bearing or the second bearing are positioned around the alloy sleeve.
